(19) Europäisches Patentamt
European Patent Office
Office européen des brevets

(11) **EP 2 378 247 B1**

(12) **FASCICULE DE BREVET EUROPEEN**

(45) Date de publication et mention
de la délivrance du brevet:
**21.05.2014 Bulletin 2014/21**

(51) Int Cl.:
*G01C 19/66* *(2006.01)*    *G01C 19/70* *(2006.01)*

(21) Numéro de dépôt: **11162094.4**

(22) Date de dépôt: **12.04.2011**

(54) **Dispositif de traitement numérique de l'information issue d'un gyrolaser et gyrolaser associé**

Vorrichtung zur digitalen Verarbeitung von Informationen eines Laserkreisels, und entsprechender Laserkreisel

Device for digital processing of information generated by a gyrolaser, and associated gyrolaser

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.04.2010 FR 1001547**

(43) Date de publication de la demande:
**19.10.2011 Bulletin 2011/42**

(73) Titulaire: **Thales**
**92200 Neuilly Sur Seine (FR)**

(72) Inventeur: **Bouyat, Stéphane**
**86130, SAINT CYR (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**GB-A- 2 098 404    US-A- 4 529 311**
**US-A- 5 225 889    US-A- 5 341 209**

**Description**

La présente invention concerne un dispositif de traitement numérique de l'information issue d'un gyrolaser ainsi qu'au gyrolaser associé.

Cette invention s'applique à tout type de gyrolaser à milieu amplificateur gazeux ou à état solide, à cavité résonnante triangulaire ou carrée, monoaxe ou triaxe.

Un gyrolaser est un capteur de vitesse utilisant un rayon laser. Il est utilisé pour la mesure des vitesses de rotation angulaires d'un porteur mobile. Ce type d'équipement est notamment utilisé pour les applications aéronautiques.

Le gyrolaser, mis au point il y a une trentaine d'années, est largement commercialisé et utilisé de nos jours. Son principe de fonctionnement est fondé sur l'effet Sagnac, qui induit une différence de fréquence entre deux modes optiques d'émission se propageant en sens opposés, dits contre-propageants, dans une cavité laser en anneau bidirectionnelle animée d'un mouvement de rotation. La cavité laser, le plus souvent de forme carrée ou triangulaire, est équipée en chacun de ses coins de miroirs réfléchissant les deux signaux émis.

Sur tout gyrolaser, plusieurs boucles d'asservissement sont nécessaires au fonctionnement optimal du capteur dans le but de fournir un signal optique contenant l'information de vitesse angulaire du mobile. On trouve ainsi:

- une boucle d'asservissement de la longueur de cavité dont la fonction est de maintenir la longueur intérieure de la cavité à une valeur multiple de la longueur d'onde des deux modes optiques,
- une boucle d'asservissement de l'activation qui vise à maintenir un mouvement oscillatoire permettant de minimiser le phénomène bien connu de zone aveugle,
- une boucle d'asservissement des puissances laser qui permet de maintenir les deux signaux optiques à un niveau constant en amont des traitements de calcul de la vitesse angulaire,
- une boucle d'asservissement du courant de décharge plasma permettant de maintenir un courant prédéfini égal dans chaque cavité.

Dans les gyrolasers connus, une partie importante de ces chaînes d'asservissement est implémentée de façon analogique ce qui engendre des problèmes de surface de carte importante et de fiabilité limitée.

De plus, la boucle d'asservissement de l'activation utilise le plus souvent un dispositif de détection reporté sur la roue d'activation, par exemple un piezo-transducteur, dont la fonction de transfert peut varier au cours du temps et entrainer des défauts non détectables qui vont entacher d'erreurs le mécanisme d'asservissement d'activation, comme par exemple dans le document US 5 341 209.

La présente invention propose, afin de pallier aux problèmes précités, une solution permettant de réduire significativement les coûts de fabrication par une réduction des étages analogiques de mise en forme et par la suppression des dispositifs de détection de mouvement de la chaîne d'asservissement de l'activation.

La solution proposée permet, par le biais d'une numérisation de l'ensemble des traitements, d'optimiser l'intégration et d'accroître la fiabilité du système. Enfin elle permet de garantir une excellente stabilité de l'amplitude d'activation et d'améliorer les performances de biais long terme du capteur, notamment dans le cas de mouvements parasites mal ou non compensés.

A cet effet, l'invention a pour objet un gyrolaser à cavité optique comportant une pluralité de miroirs, au moins un photo-détecteur délivrant deux signaux optiques en quadrature de phase, lesdits signaux étant numérisés, des moyens de pilotage de la position d'un desdits miroirs par conversion d'un signal électrique en un effort mécanique, des moyens d'activation dudit gyrolaser dans un mouvement oscillatoire par conversion d'un signal électrique d'oscillation en un effort mécanique et des moyens de mesure de la vitesse angulaire dudit gyrolaser caractérisé en ce qu'il comporte en outre :

o des moyens d'extraction de la phase $\alpha$ et du module p ou du carré du module $\rho$ du vecteur dont la partie réelle est formée par un des deux signaux numérisé et la partie imaginaire est formée par l'autre signal numérisé, ledit module $\rho$ représentant l'amplitude desdits signaux optiques et son carré représentant leur puissance,
o des moyens d'asservissement de la longueur de la cavité optique sur un multiple de la longueur d'onde desdits signaux optiques par une estimation de la pente de la courbe de variation de l'amplitude ou de la puissance en fonction du temps, lesdits moyens produisant un signal de correction déterminé en fonction de ladite pente et appliqué auxdits moyens de pilotage,
o des moyens de dérivation de ladite phase $\alpha$ sur une période de temps donnée afin de produire un signal comportant l'information globale de mouvement dudit gyrolaser,
o des moyens d'asservissement de l'activation dudit gyrolaser sur ledit mouvement oscillatoire recevant ledit signal, extrayant duquel une estimation du mouvement oscillatoire imprimé audit gyrolaser par lesdits moyens d'activation et produisant ledit signal d'oscillation dont l'amplitude est asservie sur une consigne d'amplitude donnée.

Dans une variante de réalisation de l'invention, l'extraction d'une estimation du mouvement oscillatoire est réalisée par un filtrage supprimant, dans ledit signal, les basses fréquences inférieures à un seuil donné.

Dans une variante de réalisation de l'invention, lesdits moyens d'asservissement d'activation comportent au moins des moyens pour

    o redresser ladite estimation du mouvement oscillatoire,
    o soustraire le résultat du redressage à une consigne d'amplitude d'oscillation,
    o intégrer le résultat de la soustraction sur une période de temps donnée,
    o multiplier le résultat de l'intégration avec ladite estimation déphasé d'une phase $\theta$ donnée pour obtenir ledit signal d'oscillation.

Dans une variante de réalisation de l'invention, le déphasage est effectué par un filtre déphaseur ou une boucle à verrouillage de phase.

Dans une variante de réalisation de l'invention, la phase $\theta$ vaut 180° ou 90°.

Dans une variante de réalisation de l'invention, lesdits moyens d'asservissement de la longueur de la cavité optique réalisent au moins les étapes suivantes:

    o addition d'un signal sinusoïdal de référence de fréquence et d'amplitude données au signal de correction desdits moyens de pilotage de la position d'un miroir de ladite cavité,
    o démodulation cohérente de l'amplitude ou de la puissance desdits signaux.

Dans une variante de réalisation de l'invention la démodulation cohérente est réalisée par:

    o une multiplication de l'amplitude ou de la puissance desdits signaux par ledit signal sinusoïdal de fréquence et d'amplitude données,
    o une intégration du résultat de la multiplication sur une période de temps donnée,
    o une addition du résultat de l'intégration et dudit signal sinusoïdal pour produire ledit signal de correction.

Dans une variante de réalisation de l'invention, lesdits moyens d'extraction mettent en oeuvre un algorithme de Cordic.

Dans une variante de réalisation de l'invention, ledit carré du module $\rho$ est filtré par un filtre basse-fréquence.

Dans une variante de réalisation de l'invention, ledit gyrolaser comporte en plus des moyens de contrôle automatique du gain pour asservir l'amplitude ou la puissance desdits signaux à une valeur de gain de référence.

Dans une variante de réalisation de l'invention, lesdits moyens de pilotage comportent un piezo-transducteur.

Dans une variante de réalisation de l'invention, lesdits moyens d'activation comportent une roue d'activation mécanique et un moteur piézoélectrique.

Dans une variante de réalisation de l'invention, lesdits moyens de mesure réalisent un comptage/décomptage des impulsions desdits signaux.

Dans une variante de réalisation de l'invention, ledit gyrolaser réalise une mesure de la vitesse angulaire selon les trois axes d'un trièdre et que les moyens d'asservissement de la longueur de cavité optique comportent en plus une opération de matriçage permettant de transposer les axes de réflexion des miroirs de la cavité optique vers les axes optiques des photo-détecteurs.

Dans une variante de réalisation de l'invention, l'extraction d'une estimation du mouvement oscillatoire est déterminée à partir de la matrice d'intercorrélation des trois signaux obtenus par dérivation de la phase $\alpha$ desdits signaux optiques obtenus pour chacun des trois axes.

D'autres caractéristiques apparaîtront à la lecture de la description détaillée donnée à titre d'exemple et non limitative qui suit faite en regard de dessins annexés qui représentent :

    La figure 1, un schéma illustrant une solution de l'état de l'art pour le traitement de l'information issue d'un gyrolaser,
    La figure 2, un schéma d'un exemple de réalisation de la boucle d'asservissement de longueur de cavité,
    La figure 3, un schéma d'un exemple de réalisation de la boucle d'asservissement d'activation,
    La figure 4, un schéma illustrant le dispositif selon l'invention de traitement numérique de l'information issue d'un gyrolaser.

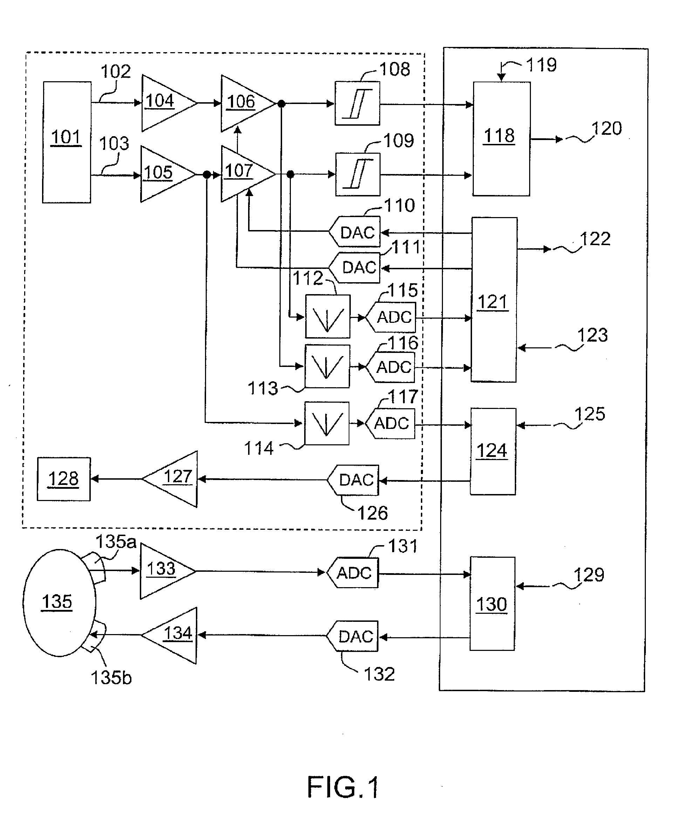

La figure 1 représente l'électronique de traitement d'un gyrolaser selon l'état de l'art actuel. Seuls les éléments nécessaires à la compréhension de l'invention sont représentés, en particulier la cavité optique et la boucle d'asservissement de courant plasma ne sont pas illustrées sur la figure. Le cadre en pointillés regroupe l'ensemble des traitements de signal analogique, le cadre en trait plein identifie les traitements numériques.

Un photo-détecteur 101, par exemple une cellule photoélectrique ou tout autre capteur transformant la lumière qu'il absorbe en une grandeur électrique mesurable, reçoit deux signaux sinusoïdaux déphasés de 90° correspondant aux deux ondes lasers contre-propageants qui ont parcouru la cavité optique du gyrolaser en sens opposés et délivre deux signaux électriques 102,103. Ces deux signaux 102,103 sont pré-amplifiés par des amplificateurs 104,105 faible bruit à gain fixe puis amplifiés une seconde fois par des amplificateurs 106,107 à gain variable. Deux comparateurs à hystérésis 108,109 sont appliqués aux deux signaux sinusoïdaux amplifiés afin de fournir deux signaux carrés à partir desquels l'information de vitesse angulaire 120 est déterminée par des moyens 118 adaptés. Les moyens 118 déterminent une mesure de la vitesse angulaire à partir du nombre d'impulsions et de leurs phases respectives. Une impulsion est créée lorsqu'une frange d'interférence se déplace devant le photo-détecteur. Cette frange correspond à un déplacement rotatif angulaire fixe et connu du gyrolaser, dépendant de ses caractéristiques physiques. Si l'on compte le nombre d'impulsions par unité de temps, on en déduit la vitesse de rotation angulaire. L'unité de temps est déterminée par la fréquence d'échantillonnage 119. La phase relative des signaux peut être inversée si le gyromètre tourne dans le sens contraire, les moyens 118 de mesure doivent donc mettre en oeuvre un comptage et un décomptage des impulsions en fonction de leur phase relative.

Le compteur/décompteur 118 prélevé à fréquence d'échantillonnage fixe 119 est une méthode connue pour réaliser une mesure de la vitesse angulaire dans un gyromètre. D'autres méthodes connues peuvent être employées sans sortir du cadre de l'invention.

## Asservissement puissances laser

Des moyens 121 de contrôle automatique du gain ou de la puissance des signaux laser 102,103 pilotent les deux amplificateurs à gain variable 106,107 afin d'asservir le niveau des signaux sur une valeur de référence 123, par exemple une valeur de 1 Volt/crète. A cet effet, les signaux délivrés en sortie des amplificateurs à gain variable 106,107 sont redressés 112,113 puis numérisés 115,116 afin que les moyens 121 déterminent une mesure de leur puissance moyenne puis délivrent deux consignes de gain qui sont converties 110,111, analogiquement pour venir piloter les amplificateurs 106,107 afin de réaliser un asservissement de puissance sur la puissance de référence 123 et également de conserver un appariement correct des deux signaux entre eux. Les moyens 121 de contrôle automatique de gain réalisent, par exemple, un correcteur numérique de type proportionnel intégral (PI) ou proportionnel intégral dérivé (PID) qui délivre un signal de commande numérique permettant d'asservir l'amplitude des signaux 102,103 en amont des comparateurs 108,109 à une valeur fixe.

Un des deux signaux 103, après pré-amplification à gain fixe 105 est prélevé puis redressé 114, et numérisé 117 avant d'être fourni en entrée de moyens 124 d'asservissement de la longueur de cavité optique du gyrolaser.

## Asservissement longueur de cavité

Pour que les franges d'interférence des deux modes optiques soient détectées avec un bon contraste et afin d'optimiser les performances du gyrolaser, il est nécessaire de maintenir la longueur de la cavité optique du gyrolaser à un multiple de la longueur d'onde du signal laser. Par longueur de cavité, on entend la longueur totale du chemin parcouru par une onde à l'intérieur de la cavité optique après rebonds successifs sur les miroirs internes à la cavité. Pour que cette propriété soit respectée, un des miroirs est mobile et est piloté par des moyens de pilotage 128, par exemple un piezo-transducteur ou tout autre moyen permettant de convertir un signal électrique en un effort mécanique, qui corrigent en permanence la longueur de cavité pour l'asservir sur un multiple de la longueur d'onde des signaux. Les moyens de pilotage 128 sont activés par des moyens 124 d'asservissement de la longueur de cavité qui délivrent une information de correction qui est numérisée 126 et amplifiée 127.

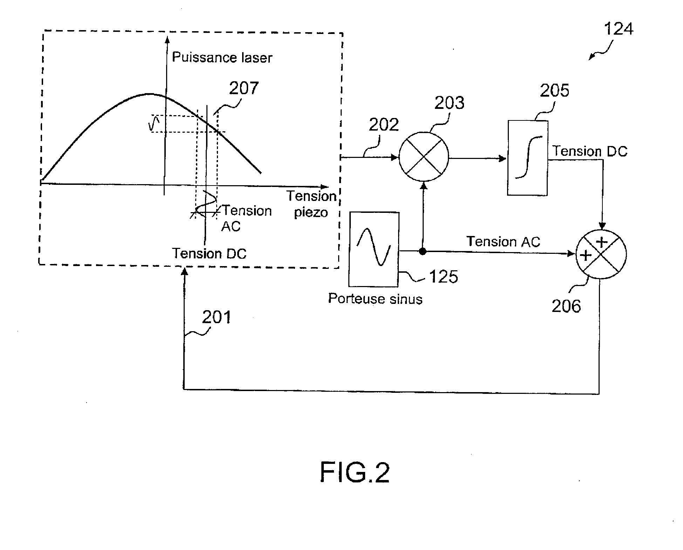

La figure 2 représente un exemple de réalisation des moyens d'asservissement 124 de longueur de cavité. Le principe utilisé pour corriger la longueur de cavité optique consiste à asservir la puissance du signal laser sur un maximum qui apparait lorsque la longueur de cavité est égale à un multiple de la longueur d'onde des signaux optiques. A cet effet, un signal connu 125 sinusoïdal d'amplitude faible est ajouté au signal électrique 201 transmis au piezo-transducteur 128. Le signal reçu 202 par les moyens d'asservissement 124 est démodulé de façon cohérente en lui appliquant une multiplication 203 par ledit signal 125 de porteuse pure puis une intégration 205 afin de déterminer la pente 207 du signal de puissance laser qu'il convient ensuite de corriger en ajoutant 206 cette valeur au signal de commande 201 du piezo-transducteur.

D'autres formes de réalisation des moyens d'asservissement 124 de la longueur de cavité optique qui remplissent la même fonction peuvent être envisagées sans sortir du cadre de l'invention.

Dans le cas d'un gyrolaser tri-axe, une opération supplémentaire de matriçage est insérée avant conversion numérique analogique 126 afin de ramener la conversion en axe cavité. Il s'agit d'une matrice de passage permettant de transposer les axes de réflexion des miroirs de la cavité optique vers les axes optiques des photo-détecteurs.

**Asservissement d'activation**

Un gyrolaser comporte également une roue d'activation mécanique 135 dont la fonction est d'assurer un mouvement permanent de la cavité afin d'éviter le phénomène connu de zone aveugle, à savoir une zone dans laquelle le gyrolaser ne détecte pas la rotation du porteur mobile lorsque la vitesse de rotation est faible. Pour lutter contre ce phénomène, la roue d'activation 135 imprime un mouvement d'oscillation, encore appelé activation, à la cavité du gyrolaser.

La roue d'activation 135 est un dispositif mécanique de type masse-ressort présentant une fréquence de résonnance propre. Des moyens 130 d'asservissement d'activation sont chargés d'entretenir l'oscillation de la roue 135 sur sa fréquence fondamentale ainsi qu'à une amplitude donnée constante.

A cet effet, la roue 135 comporte des moyens de détection 135a de son mouvement oscillatoire qui convertissent la vitesse d'oscillation en un signal électrique qui est amplifié 133 et numérisé 131. Les moyens 130 d'asservissement d'activation déterminent un signal de correction en fonction d'une consigne de référence 129 en amplitude et en phase. Ledit signal est converti analogiquement 132 puis amplifié 134 avant d'être appliqué à un dispositif 135b, que comporte la roue d'activation 135, permettant de convertir ledit signal de correction en un effort mécanique imprimé à la dite roue de façon à asservir son mouvement oscillatoire sur la consigne de référence 129. Un tel dispositif 135b peut par exemple consister en un moteur piézoélectrique.

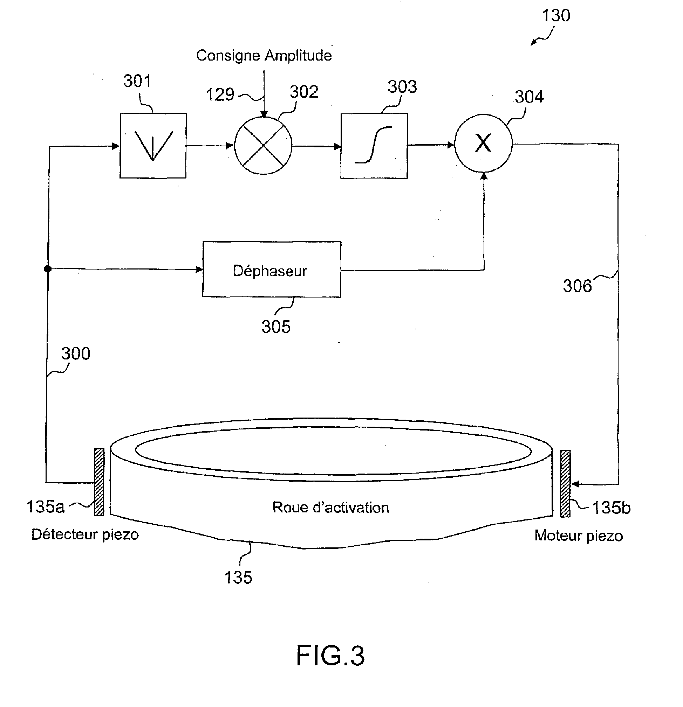

La figure 3 représente un exemple de réalisation des moyens 130 d'asservissement d'activation. Le signal électrique 300 sinusoïdal délivré par les moyens de détection 135a est une estimation du mouvement d'oscillation de la roue 135. Il est redressé 301 puis soustrait 302 à une consigne d'amplitude 129 et intégré 303. L'intégrateur 303 produit à sa sortie un gain variable qui correspond à l'erreur signée entre l'amplitude du signal sinusoïdal 300 et la consigne 129. Ce gain est ensuite injecté au signal d'oscillation 306 appliqué au dispositif moteur 135b, par l'intermédiaire d'un multiplieur 304. Ainsi, un asservissement de l'amplitude du signal d'oscillation 306 sur une valeur d'amplitude maitrisée 129 est réalisé.

Pour que l'activation de la roue 135 soit effective, il est nécessaire de réaliser une condition d'oscillation en imprimant un déphasage 305 entre le signal 300 issu des moyens de détection 135a et le signal d'oscillation 306. Cette condition d'oscillation permet d'entretenir le mouvement de la roue sur une fréquence de résonnance. A cet effet le déphasage 305 doit correspondre à la fréquence de résonnance de la roue 135.

A titre d'exemple, la valeur du déphasage peut être sensiblement égale à 180° ou à 90° si les moyens de détection 135a sont réalisés par un détecteur piézoélectrique.

Un déphasage 305 d'une valeur égale à $\theta$ peut être réalisé par un filtre analogique ou numérique dont la phase est sensiblement égale à $\theta$ pour des valeurs de fréquence sensiblement égales à la fréquence de résonnance du système oscillant. Il peut aussi être réalisé par une boucle à verrouillage de phase ou par tous autres moyens permettant d'imprimer un déphasage fixe à un signal sinusoïdal 300.

Il est important pour le bon fonctionnement du système que l'oscillation de la roue 135 soit maintenue à une amplitude constante. En effet, l'impact de ce mouvement d'activation connu doit être éliminé par des traitements numériques, situés en aval des moyens 118 de mesure de la vitesse angulaire, afin de ne conserver que le mouvement utile du mouvement du gyrolaser. Ces traitements nécessitent une calibration et une instabilité de l'amplitude d'activation induit une instabilité de biais à leur sortie.

Un inconvénient du principe d'asservissement d'activation décrit ci-dessus réside dans l'utilisation de détecteurs 135a qui peuvent souffrir de défauts non répétables dus à l'usure du temps. Leur fonction de transfert peut ainsi être affectée entrainant des erreurs de détection qui ne sont pas compensables par les moyens 130 d'asservissements d'activation car elles ne sont mesurées à aucun moment.

La présente invention propose une solution permettant notamment de résoudre ce problème en s'affranchissant de l'utilisation d'un tel détecteur 135a.

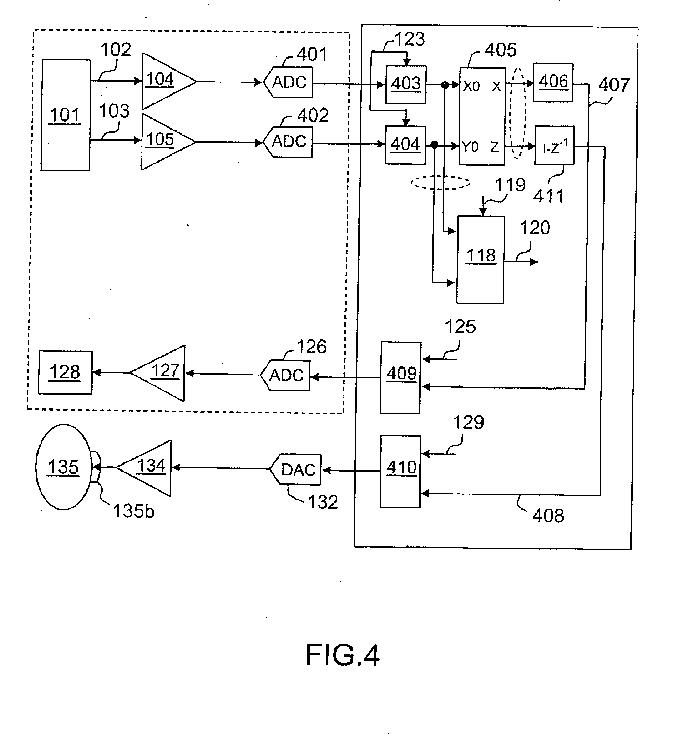

La figure 4 représente l'électronique de traitement d'un gyrolaser selon l'invention. La partie analogique du dispositif est considérablement réduite par rapport à la solution de l'art antérieur représentée à la figure 1. Les signaux optiques en quadrature de phase délivrés par le photo-détecteur 101 sont amplifiés par deux amplificateurs 104,105 à faible bruit et gain constant puis directement numérisés 401,402. Des moyens 403,404 de mise à l'échelle des signaux assurent un contrôle automatique du gain desdits signaux optiques numérisés et leur appariement de façon à ce que le gain obtenu sur les deux voies soit sensiblement identique. La bande passante du contrôle automatique de gain ainsi réalisé doit être suffisamment faible pour ne pas masquer la porteuse 125 modulée pour l'asservissement de la longueur de cavité. Par suffisamment faible, on entend une bande passante au moins inférieure d'une décade de la fréquence de modulation de la porteuse 125. Dans le cas de photo-détecteurs 101 présentant une bonne répétabilité, les moyens 403,404 de mise à l'échelle peuvent être optionnels.

Les signaux optiques éventuellement corrigés en amplitude sont ensuite considérés comme un signal complexe dont chaque échantillon numérique peut être représenté par un vecteur complexe dont la fréquence de rotation contient l'information de vitesse angulaire qui est modulée par l'auto-oscillation de la roue d'activation 135. De plus la porteuse 125 utilisée par les moyens d'asservissement de longueur de cavité vient moduler l'amplitude des signaux optiques et donc indirectement le module dudit vecteur complexe.

Le dispositif selon l'invention comporte alors des moyens 405 d'extraction de la phase et du module du vecteur complexe représentant la paire de signaux optiques en quadrature de phase. Dans un mode de réalisation particulier de l'invention, les moyens 405 d'extraction de la phase et du module sont réalisés par un algorithme de Cordic utilisé dans son mode Y-réduction. En effet, si l'algorithme de Cordic est appliqué au vecteur V= | + jQ et que l'on procède à une réduction du résidu selon Y, les sorties $X_n, Z_n$ de l'algorithme convergent après n itérations vers les valeurs suivantes :

$$X_n = A_n . [I^2 + Q^2] = A_n . \rho^2$$

$$Z_n = Arc \tan(I/Q) = \alpha$$

$A_n$ est le gain de l'algorithme dépendant du nombre n d'itérations.
$\rho$ est le module du vecteur complexe.
$\alpha$ est la phase du vecteur complexe.
On obtient donc, après n itérations, une image du carré du module du vecteur complexe ainsi qu'une image de sa phase.

D'autres moyens de calcul du module et de la phase peuvent être utilisés sans sortir du cadre de l'invention, en particulier le module peut être déterminé directement par l'expression suivante $\rho = \sqrt{I^2 + Q^2}$ et la phase $\alpha$ peut

être déterminée en utilisant une table précalculée des valeurs de sortie de la fonction arc tangente.

Le dispositif selon l'invention comporte des moyens 409 d'asservissement de la longueur de cavité optique qui reçoivent en entrée d'une part un signal de porteuse 125 de taux de modulation a et de pulsation $\omega$ connues et d'autre part le carré du module du vecteur complexe éventuellement filtré par un filtrage basse fréquence 406. En effet, le module du vecteur complexe en sortie des moyens d'extraction 405 s'écrit : $\rho = A + \alpha \sin(\omega.t)$. Son élévation au carré conduit au résultat suivant :

$$\rho^2 = (A + a.\sin(\omega t))^2 = A^2 + a^2.\sin^2(\omega t) + 2.A.a.\sin(\omega t)$$

Ainsi, le filtrage basses fréquences 406 associé à une soustraction de la composante continue $A^2$ permet de ne conserver que le terme $2.A.a. \sin(\omega t)$ qui contient l'information des caractéristiques de la porteuse 125 et qui vient remplacer le signal 202 en entrée du dispositif d'asservissement 124 décrit en figure 2. Le reste des traitements permettant de produire un signal de correction 201 sont identiques. Ils consistent en une estimation de la pente de la courbe $2.A. \alpha.\sin(\omega t)$ en fonction du temps et une correction du signal électrique appliqué aux moyens 128 de pilotage en fonction de cette pente.

Dans une variante de réalisation, les moyens d'asservissement 409 peuvent également s'appliquer au module $\rho = A + \alpha \sin(\omega.t)$ obtenu en appliquant une racine carrée sur la sortie X du dispositif 405.

Le dispositif selon l'invention comporte en outre des moyens 410 d'asservissement d'activation. Contrairement à la solution de l'art antérieur, l'information de mouvement oscillatoire de la roue d'activation 135 n'est pas obtenue par le biais d'un détecteur que comporte ladite roue mais à partir de l'angle $\alpha$ du vecteur complexe délivré par les moyens d'extraction 405, auquel est appliqué un dérivateur 411 permettant d'obtenir la pulsation $\Omega$ 408 correspondante et indirectement la fréquence F. La pulsation $\Omega$ 408 comporte à la fois l'information du mouvement oscillatoire d'activation mais également le mouvement du mobile porteur du gyrolaser. Il convient alors d'extraire uniquement l'information d'activation, c'est-à-dire la fréquence de résonance $F_0$ et l'amplitude $A_0$ du mouvement d'oscillation de la roue 135, afin de pouvoir effectuer l'asservissement de la fréquence d'oscillation et de son amplitude par rapport à une référence 129. Pour cela, deux méthodes selon l'invention sont possibles.

Une première méthode consiste à appliquer un filtrage passe-haut pour extraire uniquement l'information d'activation qui est spectralement séparée de l'information de mouvement du porteur. En effet le mouvement d'oscillation imprimé au gyrolaser présente une fréquence très supérieure à celle du mouvement du gyrolaser lui-même ou du porteur sur lequel il est embarqué. A titre d'exemple non limitatif, la fréquence du mouvement d'oscillation est typiquement de l'ordre de plusieurs centaines de Hertz alors que la fréquence du mouvement du porteur est le plus souvent de l'ordre d'une dizaine de Hertz. Ainsi il est possible d'isoler l'information du mouvement d'oscillation en éliminant les basses fréquences par le biais d'un filtre passe-haut ou passe bande.

Une seconde méthode consiste à effectuer une corrélation inter-voies des trois signaux obtenus dans le cas d'un gyrolaser tri-axe. Le mouvement d'activation étant corrélé sur les trois voies, cette corrélation est exploitée à partir de la matrice d'intercorrélation des signaux 407 représentant la phase $\alpha$ obtenue sur chacune des voies correspondant à une vitesse angulaire sur chaque axe d'un trièdre.

Une fois l'estimation 408 du mouvement d'oscillation déterminée, les moyens d'asservissement 410 mettent en oeuvre une méthode identique à celle décrite à la figure 3, par exemple une boucle à verrouillage de phase ou un filtre déphaseur.

L'exploitation de la phase du vecteur complexe formé par les deux signaux optiques permet de s'affranchir d'un détecteur de mouvement positionné sur la roue d'activation. L'amplitude d'activation obtenue est sensiblement plus précise que par l'emploi d'un détecteur d'activation selon l'art antérieur puisque le dispositif selon l'invention exploite directement le signal optique contenant l'information réelle de mouvement et non une image entachée de défauts inhérents à de tels détecteurs.

Le signal de vitesse angulaire 120 est déterminé par des moyens 118 de mesure classiques appliqués aux signaux optiques numérisés, échantillonnés à un rythme 119 et éventuellement corrigés 403,404 en puissance.

Le dispositif selon l'invention décrit à l'appui de la figure 4 est adapté à un gyrolaser mono axe mais l'invention ne se limite pas à ce cas et s'étend notamment aux gyrolasers tri axes qui permettent une mesure de la vitesse angulaire sur les trois axes à partir d'un seul bloc optique. Dans ce dernier cas, tous les éléments que comporte le dispositif selon l'invention sont triplés afin de produire trois mesures 120 de vitesse angulaire selon chacun des axes. Seule la roue d'activation 135 ainsi que ses éléments de pilotage 132,134 ne sont pas triplés. Une opération supplémentaire de matriçage doit être insérée entre les moyens d'asservissement 409 de longueur de cavité et le convertisseur numérique-analogique 126 afin d'obtenir une correction selon l'axe de la cavité.

La fonction d'activation 135 doit être effectuée dès le démarrage du gyrolaser pour éviter le phénomène de marquage des miroirs. Les moyens 410 d'asservissement d'activation selon l'invention utilisent les signaux optiques 102,103 pour en extraire l'information de mouvement oscillatoire d'activation par conséquent l'activation 135 ne peut pas être effectuée directement au démarrage du gyrolaser. Sans oscillation, le signal laser risque de marquer le miroir qui est immobile au démarrage. Pour pallier cet inconvénient, une impulsion fréquentielle ou un train d'impulsions est produit numériquement et substitué à la commande nominale pour être utilisé au démarrage comme excitation motrice de la roue d'activation.

L'invention permet de réduire le nombre d'étages analogiques d'un facteur sensiblement égal à 50% dans le cas d'un gyrolaser mono-axe ou triaxes.

## Revendications

**1.** Gyrolaser à cavité optique comportant une pluralité de miroirs, au moins un photo-détecteur (101) délivrant deux signaux (102,103) optiques en quadrature de phase, lesdits signaux (102,103) étant numérisés (401,402), des moyens (128) de pilotage de la position d'un desdits miroirs par conversion d'un signal électrique en un effort mécanique, des moyens d'activation (135) dudit gyrolaser dans un mouvement oscillatoire par conversion d'un signal électrique d'oscillation (306) en un effort mécanique et des moyens (118) de mesure de la vitesse angulaire (120) dudit gyrolaser **caractérisé en ce qu'**il comporte en outre :

○ des moyens d'extraction (405) de la phase $\alpha$ et du module $\rho$ ou du carré du module $\rho$ du vecteur dont la partie réelle est formée par un des deux signaux (102) numérisé et la partie imaginaire est formée par l'autre signal (103) numérisé, ledit module $\rho$ représentant l'amplitude (407) desdits signaux (102,103) optiques et son carré représentant leur puissance (407),
○ des moyens d'asservissement (409) de la longueur de la cavité optique sur un multiple de la longueur d'onde desdits signaux (102,103) optiques par une estimation de la pente de la courbe de variation de l'amplitude ou de la puissance (407) en fonction du temps, lesdits moyens (409) produisant un signal de correction (201) déterminé en fonction de ladite pente et appliqué auxdits moyens (128) de pilotage,
○ des moyens de dérivation (411) de ladite phase $\alpha$ sur une période de temps donnée afin de produire un signal (408) comportant l'information globale de mouvement dudit gyrolaser,
○ des moyens d'asservissement (410) de l'activation dudit gyrolaser sur ledit mouvement oscillatoire, recevant ledit signal (408), extrayant duquel une estimation (300) du mouvement oscillatoire imprimé audit gyrolaser par lesdits moyens d'activation (135) et produisant ledit signal d'oscillation (306) dont l'amplitude est asservie sur une consigne d'amplitude (129) donnée.

**2.** Gyrolaser selon la revendication 1 **caractérisé en ce que** l'extraction d'une estimation (300) du mouvement oscillatoire est réalisée par un filtrage supprimant, dans ledit signal (408), les basses fréquences inférieures à un seuil donné.

**3.** Gyrolaser selon l'une des revendications précédentes **caractérisé en ce que** lesdits moyens d'asservissement d'activation (410) comportent au moins des moyens pour

○ redresser (301) ladite estimation (300) du mouvement oscillatoire,
○ soustraire (302) le résultat du redressage (301) à une consigne d'amplitude d'oscillation (129),
○ intégrer le résultat de la soustraction (302) sur une période de temps donnée,
○ multiplier (304) le résultat de l'intégration avec ladite estimation (300) déphasé (305) d'une phase θ donnée pour obtenir ledit signal d'oscillation (306).

**4.** Gyrolaser selon la revendication 3 **caractérisé en ce que** le déphasage (305) est effectué par un filtre déphaseur ou une boucle à verrouillage de phase.

**5.** Gyrolaser selon l'une des revendications 3 ou 4 **caractérisé en ce que** ladite phase θ vaut 180° ou 90°.

**6.** Gyrofaser selon l'une des revendications précédentes **caractérisé en ce que** lesdits moyens d'asservissement (409) de la longueur de la cavité optique réalisent au moins les étapes suivantes:

○ addition (206) d'un signal sinusoïdal (125) de référence de fréquence et d'amplitude données au signal de correction (201) desdits moyens (128) de pilotage de la position d'un miroir de ladite cavité,
○ démodulation cohérente de l'amplitude ou de la puissance (202,407) desdits signaux (102, 103).

**7.** Gyrolaser selon la revendication 6 **caractérisé en ce que** la démodulation cohérente est réalisée par:

○ une multiplication (203) de l'amplitude ou de la puissance (202,407) desdits signaux (102, 103) par ledit signal sinusoïdal (125) de fréquence et d'amplitude données,
○ une intégration (205) du résultat de la multiplication (203) sur une période de temps donnée,
○ une addition (206) du résultat de l'intégration (205) et dudit signal sinusoïdal (125) pour produire ledit signal de correction (201).

**8.** Gyrolaser selon l'une des revendications précédentes **caractérisé en ce que** lesdits moyens d'extraction (405) mettent en oeuvre un algorithme de Cordic.

**9.** Gyrolaser selon l'une des revendications précédentes **caractérisé en ce que** ledit carré du module ρ est filtré (406) par un filtre basse-fréquence.

**10.** Gyrolaser selon l'une des revendications précédentes **caractérisé en ce qu'**il comporte en plus des moyens (403,404) de contrôle automatique du gain pour asservir l'amplitude ou la puissance desdits signaux (102,103) à une valeur de gain de référence (123).

**11.** Gyrolaser selon l'une des revendications précédentes **caractérisé en ce que** lesdits moyens (128) de pilotage comportent un piezo-transducteur.

**12.** Gyrolaser selon l'une des revendications précédentes **caractérisé en ce que** lesdits moyens (135) d'activation comportent une roue d'activation mécanique et un moteur piézoélectrique (135b)

**13.** Gyrolaser selon l'une des revendications précédentes **caractérisé en ce que** lesdits moyens (118) de mesure réalisent un comptage/décomptage des impulsions desdits signaux (102,103).

**14.** Gyro!aser selon l'une des revendications précédentes **caractérisé en ce qu'**il réalise une mesure de la vitesse angulaire selon les trois axes d'un trièdre et que les moyens (409) d'asservissement de la longueur de cavité optique comportent en plus une opération de matriçage permettant de transposer les axes de réflexion des miroirs de la cavité optique vers les axes optiques des photo-détecteurs (101).

**15.** Gyrolaser selon la revendication 14 **caractérisé en ce que** l'extraction d'une estimation (300) du mouvement oscillatoire est déterminée à partir de la matrice d'intercorrélation des trois signaux (408) obtenus par dérivation de la phase α desdits signaux optiques (102,103) obtenus pour chacun des trois axes.

**Patentansprüche**

1. Laserkreisel mit optischem Hohlraum, der Folgendes umfasst: mehrere Spiegel, wenigstens einen Fotodetektor (101), der zwei optische Quadraturphasensignale (102, 103) liefert, wobei die Signale (102, 103) digitalisiert (401, 402) sind, Mittel (128) zum Steuern der Position von einem der Spiegel durch Umwandeln eines elektrischen Signals in eine mechanische Kraft, Mittel (135) zum Aktivieren des Laserkreisels in eine oszillatorische Bewegung durch Umwandeln eines elektrischen Oszillationssignals (306) in eine mechanische Kraft, und Mittel (118) zum Messen der Winkelgeschwindigkeit (120) des Laserkreisels, **dadurch gekennzeichnet, dass** er ferner Folgendes umfasst:

    ○ Mittel (405) zum Extrahieren der Phase α und des Moduls ρ oder des Quadrats des Moduls ρ des Vektors, dessen Realteil von einem der zwei digitalisierten Signale (102) und dessen Imaginärteil von dem anderen digitalisierten Signal (103) gebildet wird, wobei das Modul ρ die Amplitude (407) der optischen Signale (102, 103) und deren Quadrat repräsentiert, das deren Leistung (407) repräsentiert;
    ○ Mittel (409) zum Regeln der Länge des optischen Hohlraums auf ein Vielfaches der Wellenlänge der optischen Signale (102, 103) anhand einer Schätzung der Steigung der Variationskurve der Amplitude oder der Leistung (407) in Abhängigkeit von der Zeit, wobei die Mittel (409) ein Korrektursignal (201) erzeugen, das in Abhängigkeit von der Steigung ermittelt und an die Steuermittel (128) angelegt wird;
    ○ Mittel (411) zum Ableiten der Phase α über eine gegebene Zeitperiode, um ein Signal (408) zu erzeugen, das die globale Bewegungsinformation des Laserkreisels umfasst;
    ○ Mittel (410) zum Regeln der Aktivierung des Laserkreisels auf die oszillatorische Bewegung, Empfangen des Signals (408), Extrahieren einer Schätzung (300) der oszillatorischen Bewegung daraus, in die der Laserkreisel von den Aktivierungsmitteln (135) versetzt wird, und Erzeugen des Oszillationssignals (306), dessen Amplitude auf einen gegebenen Amplitudensollwert (129) geregelt wird.

2. Laserkreisel nach Anspruch 1, **dadurch gekennzeichnet, dass** die Extraktion einer Schätzung (300) der oszillatorischen Bewegung durch Filterung realisiert wird, die in dem Signal (408) tiefe Frequenzen unterhalb eines gegebenen Schwellenwerts eliminiert.

3. Laserkreisel nach einem der vorherigen Ansprüche, **dadurch gekennzeichnet, dass** die Mittel (410) zum Regeln der Aktivierung ferner wenigstens Mittel umfassen zum:

    ○ Berichtigen (301) der Schätzung (300) der oszillatorischen Bewegung;
    ○ Subtrahieren (302) des Ergebnisses der Berichtigung (301) von einem Oszillationsamplitudensollwert (129);
    ○ Integrieren des Ergebnisses der Subtraktion (302) über eine gegebene Zeitperiode;
    ○ Multiplizieren (304) des Ergebnisses der Integration mit der Schätzung (300) um eine gegebene Phase θ verschoben (305), um das Oszillationssignal (306) zu erhalten.

4. Laserkreisel nach Anspruch 3, **dadurch gekennzeichnet, dass** die Phasenverschiebung (305) von einem Phasenverschiebungsfilter oder einem Phasenregelkreis durchgeführt wird.

5. Laserkreisel nach Anspruch 3 oder 4, **dadurch gekennzeichnet, dass** die Phase θ 180° oder 90° beträgt.

6. Laserkreisel nach einem der vorherigen Ansprüche, **dadurch gekennzeichnet, dass** die Mittel (409) zum Regeln der Länge des optischen Hohlraums wenigstens die folgenden Schritte ausführen:

    ○ Hinzufügen (206) eines sinusförmigen Referenzsignals (125) einer gegebenen Frequenz und Amplitude zu dem Korrektursignal (201) der Mittel (128) zum Steuern der Position eines Spiegels des Hohlraums;
    ○ kohärentes Demodulieren der Amplitude oder der Leistung (202, 407) der Signale (102, 103).

7. Laserkreisel nach Anspruch 6, **dadurch gekennzeichnet, dass** die kohärente Demodulation erfolgt durch:

    ○ Multiplizieren (203) der Amplitude oder der Leistung (202, 407) der Signale (102, 103) durch das sinusförmige Signal (125) einer gegebenen Frequenz und Amplitude;
    ○ Integrieren (205) des Ergebnisses der Multiplikation (203) über eine gegebene Zeitperiode;
    ○ Addieren (206) des Ergebnisses der Integration (205) und des sinusförmigen Signals (125), um das Korrektursignal (201) zu erzeugen.

8. Laserkreisel nach einem der vorherigen Ansprüche, **dadurch gekennzeichnet, dass** die Extraktionsmittel (405) einen Cordic-Algorithmus implementieren.

9. Laserkreisel nach einem der vorherigen Ansprüche, **dadurch gekennzeichnet, dass** das Quadrat des Moduls ρ durch ein Niederfrequenzfilter filtriert (406) wird.

10. Laserkreisel nach einem der vorherigen Ansprüche, **dadurch gekennzeichnet, dass** er ferner Mittel (403, 404) zum automatischen Regulieren der Verstärkung zum Regeln der Amplitude oder der Leistung der Signale (102, 103) auf einen Referenzverstärkungswert (123) umfasst.

11. Laserkreisel nach einem der vorherigen Ansprüche, **dadurch gekennzeichnet, dass** die Steuermittel (128) einen Piezowandler umfassen.

12. Laserkreisel nach einem der vorherigen Ansprüche, **dadurch gekennzeichnet, dass** die Aktivierungsmittel (135) ein mechanisches Aktivierungsrad und einen piezoelektrischen Motor (135b) umfassen.

13. Laserkreisel nach einem der vorherigen Ansprüche, **dadurch gekennzeichnet, dass** die Messmittel (118) die Impulse der Signale (102, 103) auf-/abwärtszählen.

14. Laserkreisel nach einem der vorherigen Ansprüche, **dadurch gekennzeichnet, dass** er die Winkelgeschwindigkeit entlang den drei Achsen eines Trieders misst und die Mittel (409) zum Regeln der Länge des optischen Hohlraums ferner einen Matrizierungsvorgang umfassen, mit dem die Reflexionsachsen der Spiegel des optischen Hohlraums in Richtung der optischen Achsen der Fotodetektoren (101) transponiert werden können.

15. Laserkreisel nach Anspruch 14, **dadurch gekennzeichnet, dass** die Extraktion einer Schätzung (300) der oszillatorischen Bewegung auf der Basis der Interkorrelationsmatrix der drei Signale (408) ermittelt wird, die durch Ableiten der Phase α der für jede der drei Achsen erhaltenen optischen Signale (102, 103) erhalten werden.

**Claims**

1. A gyrolaser with optical cavity comprising a plurality of mirrors, at least one photo-detector (101) delivering two quadrature-phase optical signals (102, 103), said signals (102, 103) being digitised (401, 402), means (128) for controlling the position of one of said mirrors by converting an electrical signal into a mechanical force, means (135) for activating said gyrolaser in an oscillatory movement by converting an electrical oscillation signal (306) into a mechanical force and means (118) for measuring the angular speed (120) of said gyrolaser, **characterised in that** it further comprises:

   ○ means (405) for extracting the phase α and the modulus ρ or the square of the modulus ρ of the vector, the real part of which is formed by one of said two digitised signals (102) and the imaginary part of which is formed by the other digitised signal (103), said modulus ρ representing the amplitude (407) of said optical signals (102, 103) and its square representing their power (407);
   ○ means (409) for closed-loop controlling the length of the optical cavity on a multiple of the wavelength of said optical signals (102, 103) by an estimate of the pitch of the variation curve of the amplitude or the power (407) as a function of time, said means (409) producing a correction signal (201) determined as a function of said pitch and applied to said control means (128);
   ○ means (411) for deriving said phase α over a given time period so as to produce a signal (408) comprising the overall movement information of said gyrolaser;
   ○ means (410) for closed-loop controlling the activation of said gyrolaser on said oscillatory movement, receiving said signal (408), extracting therefrom an estimate (300) of the oscillatory movement impressed on said gyrolaser by said activation means (135) and producing said oscillation signal (306), the amplitude of which is closed-loop controlled on a given amplitude setpoint (129).

2. The gyrolaser according to claim 1, **characterised in that** the extraction of an estimate (300) of the oscillatory movement is realised by filtering that eliminates, within said signal (408), any low frequencies that are below a given threshold.

3. The gyrolaser according to any one of the preceding claims, **characterised in that** said means (410) for closed-loop controlling the activation comprise at least means for:

○ rectifying (301) said estimate (300) of the oscillatory movement;
○ subtracting (302) the result of the rectification (301) from an oscillation amplitude setpoint (129);
○ integrating the result of the subtraction (302) over a given time period;
○ multiplying (304) the result of the integration with said estimate (300) phase-shifted (305) by a given phase θ so as to obtain said oscillation signal (306).

4. The gyrolaser according to claim 3, **characterised in that** said phase-shift (305) is carried out by a phase-shifting filter or a phase-locked loop.

5. The gyrolaser according to claim 3 or 4, **characterised in that** said phase θ equals 180° or 90°.

6. The gyrolaser according to any one of the preceding claims, **characterised in that** said means (409) for closed-loop controlling the length of the optical cavity carry out at least the following steps of:

○ adding (206) a reference sinusoidal signal (125) of a given frequency and amplitude to said correction signal (201) of said means (128) for controlling the position of a mirror of said cavity;
○ coherently demodulating the amplitude or the power (202, 407) of said signals (102, 103).

7. The gyrolaser according to claim 6, **characterised in that** said coherent demodulation is carried out by:

○ multiplying (203) the amplitude or the power (202, 407) of said signals (102, 103) by said sinusoidal signal (125) of a given frequency and amplitude;
○ integrating (205) the result of the multiplication (203) over a given time period;
○ adding (206) the result of the integration (205) and said sinusoidal signal (125) so as to produce said correction signal (201).

8. The gyrolaser according to any one of the preceding claims, **characterised in that** said extraction means (405) implement a Cordic algorithm.

9. The gyrolaser according to any one of the preceding claims, **characterised in that** said square of the modulus ρ is filtered (406) by a low-frequency filter.

10. The gyrolaser according to any one of the preceding claims, **characterised in that** it further comprises means (403, 404) for automatically controlling the gain for closed-loop controlling the amplitude or the power of said signals (102, 103) to a reference gain value (123).

11. The gyrolaser according to any one of the preceding claims, **characterised in that** said control means (128) comprise a piezo-transducer.

12. The gyrolaser according to any one of the preceding claims, **characterised in that** said activation means (135) comprise a mechanical activation wheel and a piezo-electric motor (135b).

13. The gyrolaser according to any one of the preceding claims, **characterised in that** said measurement means (118) carry out a count-up/count-down of the pulses of said signals (102, 103).

14. The gyrolaser according to any one of the preceding claims, **characterised in that** it measures the angular speed along the three axes of a trihedral and that said means (409) for closed-loop controlling the length of the optical cavity further comprise a matrixing operation allowing the reflection axes of the mirrors of the optical cavity to be transposed toward the optical axes of the photo-detectors (101).

15. The gyrolaser according to claim 14, **characterised in that** the extraction of an estimate (300) of the oscillatory movement is determined on the basis of the intercorrelation matrix of the three signals (408) obtained by derivation of the phase a of said optical signals (102, 103) obtained for each of the three axes.

FIG.1

FIG.2

130

Consigne Amplitude

301    129    302    303    304

Déphaseur

305

300

306

135a    Roue d'activation    135b

Détecteur piezo    Moteur piezo

135

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5341209 A